# EUROPEAN PATENT APPLICATION

(11) **EP 3 498 814 A1**
(43) Date of publication of application: **19.06.2019**
(21) Application number: 17208267.9
(22) Date of filing: 18.12.2017
(51) Int. Cl.: C11D 11/00, C11D 1/22, C09K 8/524, C09K 8/54, C10G 75/02, C10G 7/10, C10G 9/16, C23G 5/028

(54) **PIPELINE CLEANING COMPOSITION**

(71) Applicant: Pipeline Maintenance International Ltd, Colton, Staffordshire WS15 3LN (GB)
(72) Inventor: FOSTER, Steven, Aston-upon-Trent, South Derbyshire DE72 2UH (GB); MONBIOT, Richard, Colton, Staffordshire WS15 3LN (GB)
(74) Representative: Browne, Robin Forsythe

(57) **Abstract**

A pipeline cleaning or maintaining composition comprising:
isopropylamine dodecylbenzene sulphonate; or
a reaction product of dodecylbenzene sulfonic acid with isopropylamine;
wherein the composition consists of at least 50wt% of isopropylamine dodecylbenzene sulphonate.

## Description

This invention relates to a composition for cleaning and maintaining oil and gas pipelines and associated equipment. Particularly but not exclusively for cleaning and maintaining equipment used for extraction, transportation, storage of oil and gas products, including for example, pipelines, intermediate and storage tanks, valves, pumps, ponds, lakes, pits, or other components of oil transportation, handling and storage systems. These are referred to in this specification for brevity as "pipelines." Both onshore and offshore. The invention also relates to components of cleaning compositions and methods of manufacture of the cleaning compositions. The invention further relates to methods of cleaning and maintaining pipelines using the composition.

Crude oil and natural gas are complex materials which exhibit a wide spectrum of inherent characteristics, ranging for example, from sour to sweet, from free-flowing light oils to extremely heavy crudes which may be high in paraffinic wax and asphaltenes. All oil fields suffer to a greater or lesser extent from problems arising from the intrinsic nature of petroleum hydrocarbons. Impurities settle out at all stages of the system as a result of temperature changes, pressure drops, drag and gravity from the riser pipes to storage tanks. The separation of impurities leads to corrosion and to the creation of blockages through wax accretions, damage due to formation of scale, hydrogen sulphide, build-up of deposits in pipelines and storage tanks. Conventional treatment methods involve use of a range of chemicals including solvents and acids together with mechanical apparatus, such as pigs or scrapers, many of which can cause damage to equipment and environmental damage. Most conventional procedures require the use of highly toxic chemicals.

Most current procedures require production to be shut down during application. This disruption to supply has a direct effect on productivity which when added to the cost of the plant, equipment and labour required to carry out maintenance work can give rise to substantial budgets. These issues lead to unscheduled downtime for unplanned maintenance, frequent regularity for planned maintenance and replacement of parts of the system which are beyond repair.

According to a first aspect of the present invention a pipeline cleaning or maintaining composition comprises:
isopropylamine dodecylbenzene sulphonate; or
a reaction product of dodecylbenzene sulfonic acid with isopropylamine;
the composition consisting of at least 50wt% of isopropylamine dodecylbenzene sulphonate.

The composition may consist or consist essentially of 50wt% to 98wt% of isopropylamine dodecylbenzene sulphonate, (abbreviated to IDBS) also called 2-dodecylbenzene sulfonic acid - 2-propanamine.

The composition may comprise at least 70wt% isopropylamine dodecylbenzene sulfonate, for example at least 80wt%, for example at least 90wt%, for example at least 95wt% of IDBS, typically about 96wt% of IDBS.

The composition may optionally include an antifoaming agent. In many applications use of an antifoaming agent is beneficial.

In this specification the expression "consist essentially" refers to a composition which may include a small amount of impurities, reagents, reaction by-products or other ingredients which do not affect the essential properties of the composition.

Percentages and amounts in this specification are by weight unless indicated otherwise and are selected from any ranges quoted to total 100%.

Isopropylamine dodecylbenzene sulfonate is an anionic surfactant used as a minor ingredient in household, institutional and industrial cleaning products.

According to a second aspect of the present invention a pipeline corrosion inhibitor composition comprises 50wt% to 98wt%, optionally 70wt% to 98wt% of isopropylamine dodecylbenzene sulfonate (IDBS).

The corrosion inhibitor composition may consist of or consist essentially of IDBS.

Compositions containing 95wt% IDBS or more may have a high viscosity, for example 2500cPs or up to 4000cPs dependent on ambient conditions. Working pressures in oil pipelines may be high, for example over 100bar. In order to introduce the composition into a pipeline it may need to be pumped at a higher pressure using typical pumping equipment such as an electric or diaphragm pump, for example at 105bar. This may require the composition to be a free-flowing liquid. The concentrated composition may be diluted with an inert diluent, for example diesel oil or other hydrocarbon liquid to facilitate pumping into the pipeline. The composition may be diluted with up to 50wt% diluent.

The formulations may be provided as a concentrate, for example mixed with 50% with diesel oil, which may be diluted by addition into the oil flow or oil mass as required before use. The concentration of the active concentrate in the oil flow or oil mass may be in the range 50 to 100ppm for routine treatment and maintenance of pipelines or other equipment. The concentration may be increased to a value from 100ppm up to 1000ppm for use as a treatment of legacy build-up of waxes or asphaltenes within pipelines. Following removal of the legacy build-up the concentration may be reduced to a lower level for use as a preventative treatment as an inhibitor against build-up of corrosive agents or accretions within the fluid stream.

According to a third aspect of the present invention a composition for use in manufacture of a pipeline corrosion inhibitor comprises 50wt% to 98wt%, preferably at least 70wt% of isopropylamine dodecylbenzene sulfonate.

According to a fourth aspect of the present invention is a method of prevention of accretion, blockage or corrosion of a pipeline comprises the step of addition of a composition in accordance with the first, second or third aspects of the present invention to a fluid flow in the pipeline.

In an embodiment the corrosion inhibitor of the second aspect of this invention or the composition of the third aspect of this invention may comprise about 70wt% to about 98wt%, alternatively about 80wt% to about 95wt%, further alternatively about 85wt% to about 95wt% of isopropylamine dodecylbenzene sulfonate.

The compositons of this invention may comprise 50wt% to 98wt%, preferably 70wt% to 98wt%, more preferably 80wt% to 98wt%, most preferably 85wt% to 98wt% of isopropylamine dodecylbenzene sulfonate.

Use of isopropylamine dodecylbenzene sulfonate as the principal active ingredient in compositions used for reduction or inhibition of corrosion or reduction of drag in pipelines confers many advantages over materials which have previously been employed for these purposes.

Compositions of this invention may be prepared as a single product or additive to act as an effective wax and corrosion inhibitor in oil field pipelines and installations. The formulation may be applied by continuous metered dosing into an oil stream. In use the formulation may form a film on any carbon, stainless steel or other metal surface to provide a protective barrier to prevent corrosion and wax build-up on the surface. The composition may protect installations both above and below ground level, onshore and offshore, downstream of the application point, for example pipelines, oil tanks, ponds all types of valves, pumps and other equipment which may otherwise become blocked or restricted by deposits of wax or corrosion of internal surfaces. The diluted composition may form a homogeneous stream within the pipeline, preventing waxes, asphaltenes and other solids from settling out in use. Existing wax deposits may be gradually re-suspended in the oil flow as they are released from metal surfaces by the action of the composition. Rapid results may be obtained, for example within 24 hours of the commencement of the application.

The composition has the further advantage that it may be injected into a pipeline while the facility is operational, so that there is no downtime. Demonstrably improved performance of valves, instrumentation, pipeline flow and plant efficiency may be achieved within hours.

Exemplary compositions may further comprise an antifoaming agent, for example an aliphatic hydrocarbon preferably a hydrotreated, de-aromatised C₁₁ - C₁₆ aliphatic hydrocarbon such as Shellsol D70 (trade mark of Shell) or Exxsol D80 (trade mark of Exxon).

Exemplary compositions may further comprise the following ingredients:

| | |
|---|---|
| isopropylamine dodecylbenzene sulfonate | 70 - 96wt% |
| alkyl benzenesulphonates | 4 - 8 wt% |
| aminated epoxy | 2 - 8wt% |
| acrylic acid/ acrylamide copolymer | 1 - 5 wt% |

Exemplary compositions may further comprise one or more demulsifiers. These may be selected from the group consisting of: alkyl benzenesulphonates, polyether amines, phosphate ethers, sodium dioctyl sulphosuccinate and mixtures thereof.

A total amount of .01wt% to 10wt%, typically 0.5 to 3wt% for example 1wt% of the demulsifier may be employed.

The alkyl benzenesulphonate demulsifier when used, may comprise a straight chain or branched alkyl C₁₄ to C₂₂ group. Alternatively a C₁₆ to C₂₀, example a C₁₈ alkylbenzenesulphonate, for may be employed.

The one or more demulsifiers may be used, for example when naturally occurring oil/water emulsions are strengthened during well stimulation procedures. An amount of 1 to 10wt%, preferably 3 to 7wt%, more preferably 2 to 6wt%, even more preferably 4wt% may be employed. The demulsifier may serve to reduce interfacial tension between liquids which may form an emulsion in the composition in use.

The composition may alternatively or in addition include a demulsifier comprising an aminated epoxy adduct. Aminated epoxy adducts such as polyetheramines which may be employed, are manufactured by Dow Global Technologies LLC or Huntsman Corp. An amount of 1 to 5wt%, for example about 3wt% may be used.

The composition may further comprise a flocculating agent selected from the group consisting of: polyacrylamides, polyamides, acrylic acids, and mixtures thereof. Anionic flocculating agents may be employed.

Examples of polyamide flocculating agents which may be employed include APAM anionic polyacrylamides (BASF or Solvay Polymers)

The one or more flocculating agents may be present in a total amount of about 1 to about 5wt%, for example about 1 to about 3wt%, typically about 2wt%.

An exemplary composition concentrate comprises the following ingredients:

| | |
|---|---|
| isopropylamine dodecylbenzene sulphonate | 90wt% |
| alkylbenzene sulphonate | 5wt% |
| aminated epoxy adduct | 3wt% |
| acrylic acid/ acrylamide copolymer | 2wt% |
| silicone antifoaming agent | 0.01wt% |
| Total | 100% |

The composition may be prepared by mixing the ingredients by continuous shear mixing for an initial period 30 minutes at 400rpm followed by a further period of for example 30 minutes at 700rpm to provide a homogeneous mixture.

Advantageous embodiments of this invention may further comprise an absorbent, finely divided metal oxide composition. Equimolar or equal weight mixtures may be selected from the group consisting of: MgO, ZnO, TiO₂ and mixtures thereof.

The metal oxide composition may serve as a sulphur absorbing compound particularly to absorb hydrogen sulphide from the liquid or fluid pipeline flow. An exemplary sulphur absorbing composition comprises nanocrystalline metal oxides for example, mesoporous nanocrystalline metal oxides as disclosed in US 6057488 (Nantek Inc), US 7566393 (Nanoscale Corporation) or EP 2337626 (Timilon Technology Acquisitions LLC), the disclosures of which are incorporated into this specification by reference for all purposes.

An exemplary nanoparticulate oxide composition is available under the trade mark FASTACT (NanoScale Corp) may be employed. This material which is generally used for removal of toxic compounds from gases, has unexpectedly been found to be suitable for manufacture of compositions which are effective for removal of hydrogen sulphide and other sulphur compounds from liquid or semi solid pipeline flows.

The nano particulate metal oxide compositions act by adsorption and chemisorption of hydrogen sulphide and sulphur containing compounds in the oil stream. The compounds may have an average crystallite size of up to 20nm, preferably from 3nm to 8nm, more preferably about 4nm and exhibit a Brunauer-Emmett-Teller (BET) multipoint surface area of at least 15 m²/g, preferably at least 200 m²/g, more preferably about 400 m²/g. The average pore radius may be at least 45 Å, preferably 50 to 100 Å, more preferably about 60 to 75 Å.

The nano particulate metal oxide adsorbents may be used alone or may be modified by having a surface coating the quantity of a second metal oxide different to the first metal oxide. For example the first metal oxide may be selected from the group consisting of MgO and CaO and the second oxide may be Fe₂O₃.

The second oxide may comprise from 1 to 10wt%, for example 1 to 5wt% of the composite with the first metal oxide comprising 90 to 95wt%, for example 95 to 99wt%.

The metal oxide composition may be made by a process including the following steps:
1) The individual oxides, typically magnesium, titanium and zinc, are reduced to nanoparticle size using a liquid grinding process.
2) They are then dried using an evaporation process.
3) The dry powder is collected and re-ground to produce a uniform nano-scale powder.
4) The individual components are then mixed in a specific ratio, for example 33/33/33mol%.
5) This compounded mixture is then mixed with a solvent, for example tetrahydrofuran and allowed to re-crystallise. This process causes the surface area to be greatly increased resulting in an improved absorptive area
6) This material is then milled into fractions with successively smaller particle sizes.
7) A first fraction is a flake type product which may be used for dry bed gas absorptive filters, mainly for toxic fumes and odour elimination.
8) A second fraction comprises smaller particles and is compressed into a granular form which may be also used for dry bed gas filters, mainly for removal of H₂S and toxic gas neutralization.
9) A third fraction is milled into a nano-sized particulate form.
10) The nano-sized particulate material is combined with the isopropylamine dodecylbenzene sulphonate component as described below.

The nano sized particulate oxide material of step 1) or 10) may be treated with a wetting emulsifying or dispersing agent before addition to the isopropylamine dodecylbenzene sulphonate composition to prevent sedimentation during use in oil.

A preferred wetting agent or emulsifier is a nanionic polyacrylamide for example CARBOMUL HT (trade mark of Baker) or INVERMUL HT (trade mark of Baroid). An amount of 1wt% to 5wt%, for example 2.5wt% may be used.

A preferred dispersing agent is a low molecular weight sodium polyacrylate dispersant, for example DISPEX N40 (trade mark of BASF).

Compositions of the present invention confer numerous advantages. The compositions may exhibit a unique, and broad performance profile. The compositions may serve as a high performance wax and corrosion inhibitor. The composition may inhibit formation of wax, asphaltenes and corrosion on contact surfaces. This prevents build-up of wax accretions and corrosive scale which may reduce flow of crude oil through a system. The invention may also reduce drag by enhancing laminar flow along contact surfaces of a pipeline and reducing turbulence in an oil flow which may be another cause of obstruction. Pitting corrosion, which is a major cause of pipe failure, may be reduced or prevented.

Compositions of the present invention may be used for preventing or reducing growth of microorganisms in pipelines. The use of absorbent metal oxide components may reduce or inhibit the amount of sulphur containing or other nutrients present in the pipeline, preventing or restricting growth of bacteria or other microorganisms in the pipeline.

A preliminary treatment with a biocide such as glutaraldehyde may be employed to reduce the number of microorganisms prior to treatment of the pipeline with the composition of the present invention.

Accordingly the present invention also provides a method of controlling microorganisms, for example bacteria within a pipeline by treatment with a composition in accordance with a previous aspect of the present invention. The composition may serve as a biostat or bacteriostat preventing development of colonies of microorganisms during treatment with the compositions of the present invention.

The method may be further used for pipeline injection services for routine maintenance, cleaning and plugging problems. The unique ability of the composition of this invention to make the oil more miscible and keeps the oil flowing.

The method may be further used for oil well formation flooding in many geologic formation types. This process enables higher recovery rates and creates more efficient pumping and extraction.

The composition of this invention may also be used for treatment of sludge oil. Sludge oil is the floating oil and solids that accumulate on the surface of an oil-water separator. Sludge oil or secondary oil is found in evaporation ponds, sludge pits, storage tanks and permitted commercial disposal facilities. This creates environmental problems. Current options for disposal are expensive and may have limited effectiveness. This results in sludge oils being stored in pits or tanks.

The method of the present invention may be used for tank cleaning and oil recovery. This may be automated using non-man entry systems that facilitate cleaning of crude oil storage tanks. Up to 100% of the sludge or slop oil which has built up in a tank may be recovered, enabling reintroduction of the recovered oil back into the crude oil stream, reducing wastage.

The method may be also used for well stimulation processes in order to increase well production by removing paraffins, asphaltenes and bitumen from plugged perforations and occluded material around the near well bore. This may increase well production by 50% or more, up to 800% or greater.

The invention is further described by means of example but not in any limitative sense.

### Example 1 - Manufacture of isopropylamine dodecylbenzene sulfonate.

A glass lined reactor was fitted with a stirrer, air compressor, chiller and a charger for discharging pumps and was loaded with dodecylbenzene sulfonic acid (20-60wt%) and water (10-20wt%) and cooled to 10°C with agitation. Isopropylamine (20-60wt%) was added stoichiometrically over a period of 60-120 minutes with cooling to maintain the temperature in the range of 10 to 15°C. After complete addition the mixture was stirred for 30mins.

The product was a yellow viscous fluid. The pH of a 10% weight solution of in methanol was measured and adjusted so that the pH of the product was in the range 4.5 to 5.5 by addition of the acid or amine reagents as necessary.

An anti-foaming component comprising a mixture of 1-2wt% of C₁₁ - C₁₄ hydrocarbons (n-alkanes, isoalkanes or cycloalkanes) was added and stirred for 30 minutes.

### Example 2 - Manufacture of metal oxide containing composition

The following ingredients were employed:

| | |
|---|---|
| isopropylamine dodecylbenzene sulphonate (IDBS) | 45wt% |
| diesel oil | 45wt% |
| nanoparticulate mixed metal oxide (FAST ACT) | 6.5wt% |
| cross-linked polyamide surfactant (CARBOMUL HT) | 2.5wt% |
| low molecular weight polyacrylate dispersant (DISPEX N40) | 1.0wt% |

The IDBS was diluted with the diesel oil using mild mechanical stirring. The cross-linked polyamide surfactant was added at room temperature with mild mechanical stirring. The dispersant was then added at room temperature with mild mechanical stirring. The resultant mixture was then mixed using a high shear Silverson at 3000rpm for 30 minutes.

The resultant mixture was a stable suspension in the form of an off-white liquid.

### Example 3 - Tank Cleaning

A general process using the following steps may be employed.

Infra-red images may be taken of the tank in order to reveal the amount and placement of the crude oil sludge. These images may be used for before and after comparisons of the condition of the tank. A site survey may be taken of the storage tanks so that access points on the tanks may be located. Using this information the location of additional access points is determined. These may then be added to the tank in a process known as hot tapping (API RP 2201 Safe Hot Tapping Practices in the Petroleum & Petrochemical Industries). Custom designed and manufactured directional jet nozzle assemblies are then attached to the access points. The location of the jet nozzle is selected to create a vortex system within the tank in use.

The IDBS composition of Example 1 is pumped into the tank with a predetermined amount of process water and cutter stock. The jet nozzle inputs are arranged to create a closed loop system utilising a pump as the circulating mechanism. The size of the piping and pump are selected according to the overall scope of work. The pump may be monitored on a full time basis with scheduled adjustments of the jet nozzles as necessary. The sump drain is typically utilised for the suction draw, this being the lowest part of the tank. A vortex is created by the jet nozzles producing the necessary force to break the accumulated sludge materials.

The re-suspended oil created by this process is then reclaimed as usable oil. The solution containing the IDBS may continue to clean out sludge build up in the pipelines or additional storage vehicles to which it is eventually transferred. During the normal course of refining, the composition dropped out in the water phase and is no longer present in the final refined petroleum product. Solids, for example sand, pebbles and rock fragments which drop out of the suspension and settle to the tank floor can be removed through a simple addition of an automated de-sander or solids removal equipment or by manned entry to the tank. Manned entry is safe because the use of the composition may degas the tank during cleaning. It is not necessary in all cases to remove these solids.

This process may result in a safe method of sludge reclamation with no manned entry to the tanks being necessary.

Many benefits may be achieved. An 80 to 90% reduction in tank cleaning time and shorter overall tank down time may be achieved. Near 100% recovery of hydrocarbons could be obtained with minimal waste disposal necessary. Minimal hydrocarbon emissions to the atmosphere may occur using a closed loop cleaning system.

### Example 4 - Well Stimulation

The following general procedure may be used for well stimulation in order to improve oil well productivity. This process not only increases well production but decreases the amount of paraffin, asphaltenes, bitumen and major unwanted components in sludge which may plug pipelines could be transferred to oil storage facilities. The heavy crude oils by definition contain larger percentages of these components. In a general process the depth of the well, the chloride concentration of the produced water, formation type and the tubing and casing size necessary are assessed to determine the amount of water which will be needed. The amperage reading on the pump motor before and after treatment are observed. The production rates of the well and pipeline pressure before and after treatment are also determined. If necessary, a complete treatment of the pipeline is carried out in advance of the well stimulation. If the surface pipeline is in the same condition one should treat the pipeline to the battery or header or whatever facility is downstream. This will provide an initial increase in pipeline pressure after treatment as the pipeline begins to become free. Eventually a reduction in pipeline pressure will be observed as the materials are moved. The reduction in pipeline pressure may reach 20 to 30%.

A pump is then connected to the well annulus and the IDBS component is heated to 95°C. The premixed composition is pumped through the annulus overcoming the well pressure to force the composition down the well annulus into the formation. Once the composition is down the well and the pump is moving the water, the composition will wet the entire system and release occluding material from the well and near well bore opening up the perforations naturally and maintaining a free flow.

The method may be further used for well bore clean out and formation flooding. Use of the composition may reduce drag effectively making the lower API oil easier to pump while simultaneously dropping out water and allowing oil to float on top of the formation.

### Example 5 - Cleaning and Maintenance of Sludge Pit and Lagoons

The method of this invention allows cleaning and maintenance sludge pits and lagoons to be carried out safely and efficiently by using the composition to re-suspend the bottom sludge while floating the oil. Water containing en-trained composition may be recovered for repeated use in cleaning additional pits or other related problems. The following general procedure may be used.

The composition is circulated within the sludge pit or lagoon using a nozzle and pumping system. When the oil and water begin to separate, the sand falls out into the bottom of the pit. The top oil portion may be pumped through an oil water separator and the oil put into a storage tank or shipment. The water may be pumped into a dehydration pit and allowed to settle out for a predetermined time. Any oil remaining in the water may be skimmed off. Sand may be stockpiled and made available for road construction and mixed with asphalt. The BSW of the processed oil will be less than 0.5%. The process water may be clean enough for water injection into the formation or pumping into a disposal well. Thinner oil may be used to blend out thick batches but usually an acceptable specific gravity BSW may be obtained to maintain a steady supply.

## Claims

1. A pipeline cleaning or maintaining composition comprising:
isopropylamine dodecylbenzene sulphonate; or
a reaction product of dodecylbenzene sulfonic acid with isopropylamine;
wherein the composition consists of at least 50wt% of isopropylamine dodecylbenzene sulphonate.

2. A pipeline corrosion inhibitor composition comprising: isopropylamine dodecylbenzene sulphonate; or
a reaction product of dodecylbenzene sulfonic acid with isopropylamine; wherein the composition consists of at least 50wt% of isopropylamine dodecylbenzene sulphonate.

3. A composition for use in manufacture of a pipeline corrosion inhibitor comprising: isopropylamine dodecylbenzene sulphonate; or
a reaction product of dodecylbenzene sulfonic acid with isopropylamine; wherein the composition consists of at least 50wt% of isopropylamine dodecylbenzene sulphonate.

4. A composition as claimed in any preceding claim, consisting essentially of 50wt% to 98wt% preferably 70wt% to 98wt%, more preferably 80wt% to 98wt%, most preferably 85wt% to 98wt% of isopropylamine dodecylbenzene sulphonate.

5. A composition as claimed in any preceding claim, further comprising an anti-foaming agent.

6. A composition as claimed in any preceding claim, further comprising a demulsifier.

7. A composition as claimed in any preceding claim, further comprising a flocculating agent selected from the group consisting of polyacrylamides, polyamides, acryclic acids and mixtures thereof.

8. A composition as claimed in any of claims 1 to 3, comprising:
| | |
|---|---|
| isopropylamine dodecylbenzene sulfonate | 70 - 96wt% |
| alkyl benzenesulphonate | 4 - 8 wt% |
| aminated epoxy adduct | 2 - 8wt% |
| acrylic acid/ acrylamide copolymer | 1 - 5 wt% |
wherein the amounts are selected from the ranges quoted to total 100wt%.

9. A composition as claimed in claim 8, comprising:
| | |
|---|---|
| isopropylamine dodecylbenzene sulphonate | 90wt% |
| alkylbenzene sulphonate | 5wt% |
| aminated epoxy adduct | 3wt% |
| acrylic acid/ acrylamide copolymer | 2wt% |
| silicone antifoaming agent | 0.01wt% |
| Total | 100% |

10. A composition as claimed in any preceding claim, further comprising an absorbent, finely divided metal oxide composition.

11. A composition as claimed in claim 10, wherein the metal oxide is selected from the group consisting of MgO, ZnO, TiO₂ and mixtures thereof.

12. A composition as claimed in any of claims 10 or 11, wherein the metal oxide is treated with a wetting or emulsifying or dispersing agent before mixing with the isopropylamine dodecylbenzene sulphonate composition.

13. A composition as claimed in claim 12, wherein the wetting agent or emulsifier is selected from the group consisting of a non-ionic polyacrylamides.

14. A composition as claimed in any preceding claim, further comprising from 1 wt% to 50wt% of hydrocarbon diluent.

15. A method of prevention of an accretion or corrosion of a pipeline comprising the step of addition of a composition in accordance with any preceding claim to a fluid flow in the pipeline.
